# FASCICULE DE BREVET EUROPEEN

(11) **EP 0 584 010 B1**
(45) Date de publication et mention de la délivrance du brevet: **20.12.1995**
(21) Numéro de dépôt: 93402044.7
(22) Date de dépôt: 11.08.1993
(51) Int. Cl.: B64C 13/16, B64C 13/50, G05D 1/02

(54) **Procédé de commande des gouvernes d'un avion pour compenser à basse vitesse une déviation latérale de trajectoire**
Verfahren zur Bedienung der Steuerflächen eines Flugzeuges um eine seitliche Umlenkung der Flugbahn bei niedriger Geschwindigkeit zu kompensieren
Method of actuation of the control surfaces of an aircraft to make up for a lateral deviation of the flight path at low speed

(30) Priorité: 14.08.1992 FR 9210038
(43) Date de publication de la demande: 23.02.1994
(73) Titulaire: AEROSPATIALE Société Nationale Industrielle, 75781 Paris Cédex 16 (FR)
(72) Inventeur: Rivron, Vincent, F-31100 Toulouse (FR); Vollard, Cécile, F-31100 Toulouse (FR)
(74) Mandataire: Dubois-Chabert, Guy

(56) Documents cités:
- US-A- 4 935 682

## Description

### Domaine technique

La présente invention a pour objet un procédé de commande des gouvernes d'un avion pour compenser à basse vitesse une déviation latérale de trajectoire.

### Etat de la technique antérieure

Les règlements de certification des gros avions de transport multimoteurs imposent de prendre en considération l'éventualité d'une panne moteur survenant au sol lors du décollage, suivie de la poursuite du roulement de l'avion jusqu'à une vitesse prévue de rotation puis d'envol : la déviation latérale de la trajectoire au cours de cette phase ne doit pas dépasser une valeur limite.

Pour contrer le couple de lacet résultant d'une panne moteur, le pilote dispose de ses commandes de vol primaires et notamment de la gouverne de direction qu'il braque à l'aide du palonnier.

Si le couple de lacet est élevé, ce braquage peut atteindre la butée physique de débattement de la gouverne de direction et il existe une vitesse minimale en dessous de laquelle la déviation latérale, lors de la poursuite du décollage, ne peut être limitée aux valeurs spécifiées : toute panne moteur survenant à une vitesse inférieure doit alors impérativement conduire à l'abandon du décollage.

Plus cette vitesse minimale est élevée, plus la longueur de piste minimale requise pour autoriser le décollage de l'avion à une masse donnée sera élevée ou, ce qui est équivalent, plus la masse décollable d'une longueur de piste disponible donnée sera faible.

Actuellement, les gouvernes présentes sur la voilure (ou surfaces alaires) sont commandées par le pilote à l'aide du manche ou du volant. L'utilisation de ces surfaces lors de cette phase critique du décollage ne peut résulter que d'une action du pilote sur son manche ou volant selon l'axe du gauchissement. Cette action, elle-même, ne se justifie que si, sous l'effet de la panne, l'avion a une tendance franche à quitter l'assiette latérale nulle de roulement. Sur de nombreux avions, cette tendance franche n'existe pas et, en conséquence, la seule action du pilote prise en considération pour déterminer la déviation latérale de la trajectoire lors d'une panne moteur au décollage est l'application du braquage maximum de la gouverne de direction.

Le procédé de l'invention a pour objet d'améliorer le comportement d'un avion équipé de commandes de vol électriques en présence d'une telle situation dissymétrique, qui peut donc avoir une cause propre à l'avion (panne d'un moteur, transport de charge extérieure, etc...) ou extérieure à l'avion (vent de travers, piste partiellement inondée, etc...).

### Exposé de l'invention

La présente invention propose un procédé de commande automatique des gouvernes d'un avion pour compenser à basse vitesse une déviation latérale de trajectoire, caractérisé en ce qu'au-delà d'un seuil de braquage déterminé de la gouverne de direction on commande un braquage, proportionnel au dépassement de seuil, des surfaces alaires de l'une des deux ailes, cette aile étant celle du côté de ladite gouverne de direction braquée, de manière à apporter un supplément de traînée sur cette aile, et donc de couple de lacet sur l'avion.

On peut ainsi commander un braquage d'au moins un aileron de l'aile du côté de la gouverne de direction braquée. Avantageusement, si chaque aile est équipée de deux ailerons, on commande un braquage différentiel des ailerons de l'aile considérée, l'un étant braqué vers le bas, l'autre vers le haut de manière à minimiser le couple de gauchissement (ou de roulis).

Avantageusement on peut également braquer vers le haut au moins un spoiler sur l'aile du côté de la gouverne de direction braquée, d'une quantité telle que le couple de gauchissement créé par l'ensemble des gouvernes braquées soit minimisé. On peut, d'une manière générale, commander toute surface alaire dont le braquage peut faire varier la différence de traînée entre les deux ailes dans le sens voulu.

Grâce au procédé de l'invention, lors de la phase de décollage avec panne moteur ou vent de travers, l'efficacité en lacet des gouvernes aérodynamiques de l'avion est augmentée lorsque le pilote applique le plein braquage de la gouverne de direction et ce, sans aucune autre action du pilote. On peut ainsi réduire la déviation latérale ou, ce qui en découle, réduire la vitesse minimale en dessous de laquelle la déviation devient excessive et le décollage doit être abandonné. Il s'ensuit, dans certaines conditions, une augmentation de la masse décollable sur une piste donnée.

Par ailleurs, cette augmentation de l'efficacité en lacet est accompagnée d'une minimisation des effets indirects et indésirables sur l'axe de gauchissement, induits par le braquage du palonnier.

L'application du procédé de l'invention est possible à tous les cas de dissymétrie (panne moteur au décollage, vent de travers...) susceptibles d'être rencontrés à faible vitesse, aussi bien au sol qu'en vol.

### Brève description des dessins

- La figure 1 illustre la position des gouvernes d'un avion ;
- la figure 2 illustre schématiquement la commande des gouvernes d'une aile grâce au procédé de l'invention ;
- la figure 3 représente un graphe donnant le braquage des surfaces alaires en fonction du braquage de la gouverne de direction, pour illustrer le procédé de l'invention dans le cas d'un avion de configuration analogue à l'Airbus A340.

### Principes généraux

Les mouvements d'un avion en vol sont obtenus par la manoeuvre d'un certain nombre de surfaces mobiles ou gouvernes, elles-mêmes commandées par les organes de pilotage mis à la disposition du pilote, soit un manche (axes de tangage ou de roulis) et des pédales (ou palonnier pour l'axe de lacet).

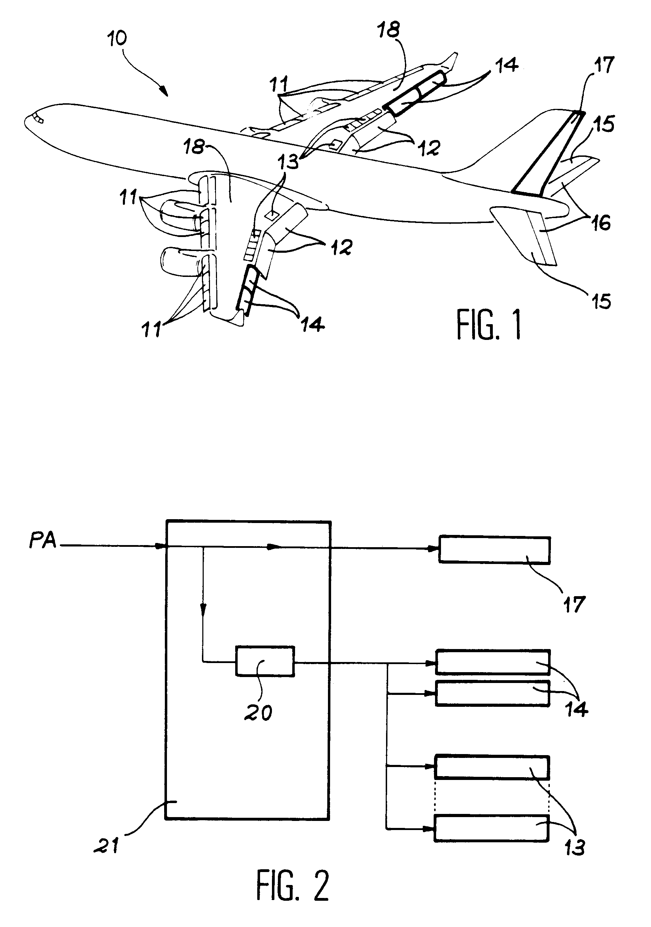

Comme représenté sur la figure 1, dans le cas d'avions 10 de type airbus, on peut dénombrer :
1/ Sur la voilure, où les gouvernes sont les plus nombreuses :
   - une série de becs basculants 11 ("slats") à l'avant ;
   - une série de volets 12 ("flaps") à l'arrière ;
      déployés au décollage et à l'atterrissage pour procurer une hypersustentation ;
   - une série de spoilers 13 (à l'extrados), avec trois fonctions assez différentes (et/ou complémentaires), ayant un mouvement soit symétrique comme aérofrein (en vol), ou comme déporteur (roulage au sol à l'atterrissage), soit dissymétrique, en assistance des ailerons ;
   - deux ailerons 14 par aile : braquage différentiel entre gauche et droite. Les ailerons internes sont efficaces pendant tout le vol et sont assistés par les ailerons externes à basse vitesse.
2/ Pour les empennages arrière, les surfaces actives sont :
   - un plan horizontal réglable 15, qui permet d'ajuster l'équilibre de l'avion en tangage, selon la vitesse et la position de son centre de gravité (essentiellement variable selon le chargement initial au sol, comme en vol selon l'épuisement progressif des réservoirs ; fonctionnement symétrique) ;
   - les gouvernes de profondeur 16, assujetties au précédent, permettant le pilotage dans le plan vertical en tangage (fonctionnement symétrique) ;
   - la gouverne de direction 17, ou "gouvernail", qui sert à commander le lacet de l'avion.

### Exposé détaillé des modes de réalisation

L'ère des commandes mécaniques, ou mécano-hydrauliques, étant révolue notamment pour les gros porteurs civils, les avions actuels sont du type commandes de vol électriques ou "Fly by Wire" pour les anglais. Les avantages en sont nombreux : poids, fiabilité, facilité des redondances, pour la sécurité, mixage des commandes, etc...

Dans le procédé de l'invention, on tire parti des commandes de vol électriques pour détecter un braquage important du palonnier et pour commander en conséquence, de façon automatique et même si le manche ou le volant n'est pas braqué en gauchissement, un braquage des surfaces alaires propre à engendrer une augmentation de traînée sur une seule aile. Ceci se traduit par un couple de lacet venant s'ajouter à celui provoqué par la gouverne de direction commandée par le palonnier.

Selon le procédé de l'invention, comme représenté sur la figure 2, par exemple lorsque l'avion est au sol en phase de décollage. on détecte que le palonnier PA demande un braquage de la gouverne de direction 17 proche de la butée : au-delà d'un certain seuil S, on braque, sous le contrôle d'une unité de calcul 21, les surfaces de gauchissement d'une aile 18, de façon à augmenter la traînée sur cette aile. Ce braquage est proportionnel au dépassement d'un seuil 20 et vient s'ajouter à celui résultant de la commande de gauchissement.

Lorsque chaque aile est pourvue de deux ailerons 14, comme représenté sur la figure 1, l'un est braqué vers le bas et l'autre vers le haut, de façon à minimiser le couple de gauchissement. De même pour augmenter le couple de lacet, un ou plusieurs spoilers 13 peuvent être braqués vers le haut sur cette même aile, d'une quantité telle que le couple de gauchissement créé par l'ensemble des surfaces braquées (ailerons, direction, spoiler(s)) soit minimisé.

Dans le procédé de l'invention on introduit donc une notion nouvelle de braquage différentiel des deux ailerons d'une même aile du côté de la gouverne de direction braquée (sans modifier la situation de l'aile opposée) pour génerer ainsi un complément de traînée permettant d'obtenir le couple de lacet souhaité.

De plus l'effet global selon l'axe de gauchissement de l'ensemble des gouvernes aérodynamiques ainsi braquées, y compris la gouverne de direction, est soigneusement dosé de façon à minimiser les effets indésirables.

D'une manière plus générale, le procédé de l'invention est applicable à un avion dont les ailes ne sont pas équipées de deux ailerons de chaque côté mais seulement d'un seul, ce qui est courant. Dans ce cas on utilisera, pour appliquer le procédé, le braquage de la combinaison de spoilers et de l'unique aileron qui convient pour atteindre le but visé.

Dans la suite de la description, on va considérer, à titre d'exemple non limitatif, l'utilisation du procédé de l'invention dans le cas d'un avion de configuration analogue à l'Airbus A340.

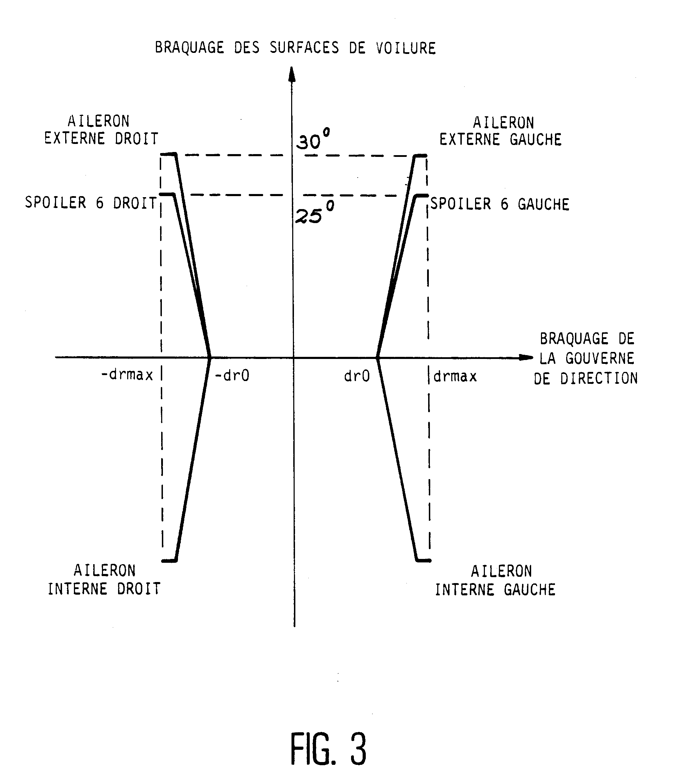

Dans ce cas, lorsque le procédé de l'invention est activé, dès que l'on détecte un braquage de la gouverne de direction supérieur à un seuil drO, on calcule les ordres de braquage aux ailerons et spoilers qui permettent d'augmenter l'efficacité de la gouverne de direction. La figure 3 illustre les valeurs prises en compte dans ce cas.

Il faut remarquer que l'on peut également calculer ces ordres au-delà d'un seuil sur le palonnier (et non plus sur la direction).

Si on considère les notations suivantes :
- dr braquage de la gouverne de direction,
- drO seuil sur la gouverne de direction,
- drmax braquage maximal de la gouverne de direction,
avec la convention de signe suivante :
- le braquage aileron est positif lorsque le bord de fuite de l'aileron est vers le bas,
- le braquage direction est positif lorsque le bord de fuite de la gouverne de direction est vers la gauche,
on obtient en pratique les ordres de braquage suivants :
- si |dr|<drO, l'ordre de braquage aux ailerons et au spoiler 6 donné par le procédé de l'invention est nul ;
- si drO<|dr|<drmax-5° environ,
   * l'ordre de braquage sur l'aileron externe passe linéairement de 0 (pour |dr|=drO) à environ 30° (pour |dr|=drmax-5° environ),
   * l'ordre de braquage sur l'aileron interne passe linéairement de O (pour |dr|=drO) à environ -30° (pour |dr|=drmax-5° environ),
   * l'ordre de braquage sur le spoiler 6 passe linéairement de O (pour |dr|=drO) à environ 25° (pour |dr|=drmax-5° environ) ;
- si |dr|>drmax-5° environ :
   * l'ordre de braquage sur l'aileron externe est égal à environ 30°,
   * l'ordre de braquage sur l'aileron interne est égal à environ -30°,
   * l'ordre de braquage sur le spoiler 6 est égal à environ 25°.

Ces ordres de braquage sont appliqués :
- sur l'aile droite si la gouverne direction est braquée vers la droite (dr<O),
- sur l'aile gauche si la gouverne de direction est braquée vers la gauche (dr>O).

De plus, chaque ordre fourni par le procédé de l'invention est ajouté ultérieurement aux ordres calculés pour induire le mouvement de roulis, la priorité étant laissée à ce dernier. En effet, si sur une surface alaire la somme de l'ordre fourni par le procédé de l'invention et de l'ordre calculé pour le mouvement de roulis dépasse la valeur maximale de braquage autorisée, on retranche sur la surface alaire équivalente de l'autre aile ce qui dépasse de la limite.

Il est a retenir que si le procédé de l'invention trouve sa première application sur un gros avion de transport civil en phase de décollage, ce procédé est également applicable à tous types d'avion, que ce soit en vol ou au décollage.

## Revendications

1. Procédé de commande automatique des gouvernes d'un avion pour compenser à basse vitesse une déviation latérale de trajectoire, caractérisé en ce qu'au-delà d'un seuil (20) de braquage déterminé de la gouverne de direction braquée (17) on commande un braquage, proportionnel au dépassement de seuil, des gouvernes (13, 14) de l'une des deux ailes (18), cette aile étant celle du côté de ladite gouverne de direction braquée (17), de manière à apporter un supplément de traînée sur cette aile, et donc de lacet sur l'avion.

2. Procédé de contrôle selon la revendication 1, caractérisé en ce que on commande un braquage d'au moins un aileron (14) de l'aile (18) du côté de la gouverne de direction braquée (17).

3. procédé de contrôle selon la revendication 2, caractérisé en ce que si chaque aile est equipée de deux ailerons, on commande un braquage différentiel des ailerons (14) de l'aile du côté de la gouverne de direction braquée, l'un étant braqué vers le bas, l'autre vers le haut de manière à minimiser le couple de gauchissement.

4. Procédé de contrôle selon l'une quelconque des revendications précédentes, caractérisé en ce qu'on braque vers le haut au moins un spoiler (13), sur l'aile du côté de la gouverne de direction braquée, d'une quantité telle que le couple de gauchissement créé par l'ensemble des gouvernes (13, 14) braquées soit minimisé.

## Claims

1. Process for the automatic control of the control surfaces of an aircraft for the low speed compensation of a lateral path deviation, characterized in that beyond a given deflection threshold (20) of the deflected rudder (17), a deflection is controlled, which is proportional to the exceeding of the threshold, of the control surfaces (13, 14) of one of the two wings (18), said wing being on the side of the deflected rudder (17), so as to supply a drag supplement to said wing and therefore yaw to the aircraft.

2. Control process according to claim 1, characterized in that a deflection of at least one aileron (14) of the wing (18) on the side of the deflected rudder (17) is controlled.

3. Control process according to claim 2, characterized in that if each wing is equipped with two ailerons, a differential deflection of the ailerons (14) of the wing on the side of the deflected rudder is controlled, one being deflected downwards and the other upwards so as to minimize the roll torque.

4. Control process according to any one of the preceding claims, characterized in that, on the wing on the side of the deflected rudder, at least one spoiler (13) is deflected upwards by a quantity such that the roll torque created by all the deflected control surfaces (13, 14) is minimized.

## Patentansprüche

1. Verfahren zur automatischen Bedienung der Steuerflächen eines Flugzeugs, um eine seitliche Umlenkung der Flugbahn bei niedriger Geschwindigkeit zu kompensieren, **dadurch gekennzeichnet, daß** man jenseits einer vorgegebenen Einschlaggrenze (20) des Seitenleitwerks (17) eine Schwenkbewegung der Steuerflächen (13, 14) der einen der beiden Tragflächen (18) durchführt, die dem Überschreiten dieser Grenze proportional ist, wobei diese Tragfläche diejenige auf der Seite des eingeschlagenen Seitenleitwerks (17) ist, so daß ein zusätzlicher Widerstand auf dieser Tragfläche und also ein Gieren für das Flugzeug bewirkt wird.

2. Steuerungsverfahren nach Anspruch 1, **dadurch gekennzeichnet, daß** eine Steuerung wenigstens eines Querruders (14) der Tragfläche (18) auf der Seite des eingeschlagenen Seitenleitwerks (17) vorgenommen wird.

3. Steuerungsverfahren nach Anspruch 2, **dadurch gekennzeichnet, daß**, wenn jede Tragfläche mit zwei Querrudern versehen ist, eine unterschiedliche Steuerung der Querruder (14) der Tragfläche auf der Seite des eingeschlagenen Seitenleitwerks (17) vorgenommen wird, wobei ein Querruder nach unten und das andere nach oben geschwenkt wird, so daß das Verwindungsmoment möglichst gering gehalten wird.

4. Steuerungsverfahren nach einem der vorhergehenden Ansprüche, **dadurch gekennzeichnet, daß** wenigstens ein Spoiler (13) auf der Tragfläche auf der Seite des eingeschlagenen Seitenleitwerks nach oben geschwenkt wird, und zwar so weit, daß das durch die verschwenkten Steuerflächeneinheiten (13, 14) erzeugte Verwindungsmoment so gering wie möglich gemacht wird.
